# EUROPEAN PATENT SPECIFICATION

(11) **EP 3 171 144 B1**
(45) Date of publication and mention of the grant of the patent: **29.07.2020**
(21) Application number: 16199671.5
(22) Date of filing: 18.11.2016
(51) Int. Cl.: G01K 1/14, G01K 13/02

(54) **GAS TURBINE ENGINE COMPRISING A SEALED AND ACTIVELY COOLED INSTRUMENTATION EGRESS, AND METHOD FOR SEALING AN ACTIVELY COOLED INSTRUMENTATION EGRESS**
GASTURBINENMOTOR UMFASSEND EINEN ABGEDICHTETEN UND AKTIV GEKÜHLTEN INSTRUMENTIERUNGSAUSGANG UND METHODE ZUM ABDICHTEN EINES AKTIV GEKÜHLTEN INSTRUMENTIERUNGSAUSGANGS
TURBOMACHINE À GAZ COMPRENANT UNE SORTIE D'INSTRUMENTATION SCELLÉE ET ACTIVEMENT REFROIDIE, ET MÉTHODE POUR SCELLER ET REFROIDIR LA SORTIE D'INSTRUMENTATION

(30) Priority: 18.11.2015 US 201514944690
(43) Date of publication of application: 24.05.2017
(73) Proprietor: United Technologies Corporation, Farmington, CT 06032 (US)
(72) Inventor: Witlicki, Russell B., Wethersfield, CT 06109 (US); Messerschmidt, Dwayne E., Columbia, CT 06237 (US)
(74) Representative: Dehns

(56) References cited:
- US-A1- 2014 178 185
- Conax Technologies: "Sealing Gland Assembly Instructions", , 31 October 2010 (2010-10-31), XP055355509, Retrieved from the Internet: URL:http://web.archive.org/web/20170316085 649/http://www.conaxtechnologies.com/wp-co ntent/uploads/2016/06/6026.pdf [retrieved on 2017-03-16] & Anonymous: "Timestamp screenshot to establish the date of XP055355509", , 16 March 2017 (2017-03-16), XP055355523, Retrieved from the Internet: URL:http://www.conaxtechnologies.com/wp-co ntent/uploads/2016/06/6026.pdf [retrieved on 2017-03-16]
- Anonymous: "Electro-Meters - Conax MHM Series", , 1 June 2013 (2013-06-01), XP055355598, Retrieved from the Internet: URL:http://web.archive.org/web/20130601214 456/http://www.electro-meters.com/conax/mh m_glands/ [retrieved on 2017-03-16]

## Description

### TECHNICAL FIELD

The present disclosure relates generally to instrumentation for gas turbine engine testing, and specifically to an instrumentation adaptor for use in a gas turbine engine during testing.

### BACKGROUND

During the development and testing of gas turbine engines, such as those used in military and commercial aircraft, it is necessary to install instrumentation within pressurized compartments internal to the engine. By way of example, bearing systems and similar compartments within the engine need to be monitored during testing. The instrumentation allows the pressure, temperature, and other parameters within the compartment to be monitored during the engine testing by providing data back to a controller, or other data collection device, via lead wires.

The compartment containing the instrumentation includes a lead wire egress. The lead wire egress configuration must allow the lead wires to exit the pressurized compartment, and must also prevent the leakage of fluids, such as air or oil, from the pressurized compartment. In some examples, the fluids within the pressurized compartment are flammable, or are critical to the engine operation, and leakage of the fluids through the instrumentation egress can disrupt the engine test.

Compartments internal to the test engine, such as bearing compartments, have limited space in which an instrumentation egress, and corresponding seal, can be positioned. As a result, large multi-piece fittings suitable for use on an engine casing may not be possible at the internal compartment. Similarly, space and material constraints can prevent the utilization of welded seals.

US 2014/0178185 A1 discloses a gas turbine engine having a sealed instrumentation egress.

Conax Technologies, "Sealing Gland Assembly Instructions", discloses a prior art instrumentation adapter.

"Electro-Meters - Conax MHM Series" discloses background art.

### SUMMARY OF THE INVENTION

According to the invention, there is provided a gas turbine engine as set forth in claim 1.

In an embodiment of the above described gas turbine engine the exterior facing interface feature includes a threaded exterior surface.

Another embodiment of any of the above described gas turbine engines further includes a plurality of instrumentation leads passing through the seat, seal, follower and compressive component.

In another embodiment of any of the above described gas turbine engines the seal is crushed against each of the leads in the plurality of instrumentation leads, such that an at least approximately airtight seal exists around each of the leads.

In another embodiment of any of the above described gas turbine engines each of the seat, follower, and compressive component include at least one lead pass through.

In another embodiment of any of the above described gas turbine engines the at least one lead pass through is sized to loose fit at least one instrumentation lead.

In another embodiment of any of the above described gas turbine engines the cooling tube is connected to the instrumentation adaptor via a seal.

Another embodiment of any of the above described gas turbine engines further includes at least one instrumentation sensor positioned within a gas turbine engine compartment, the instrumentation sensor including at least one lead wire, and the at least one lead wire passing through the at least one instrumentation egress.

In another embodiment of any of the above described gas turbine engines the gas turbine engine compartment is a bearing compartment.

There is further provided a method for sealing an instrumentation egress for a test engine as set forth in claim 10.

An example of the above described exemplary method for sealing an instrumentation egress for a test engine the interface between the compressive component and the inward facing surface of the instrumentation egress is an exterior facing threading of the compressive component and a complimentary inward facing threading of the inward facing surface.

These and other features of the present invention can be best understood from the following specification and drawings, the following of which is a brief description.

### BRIEF DESCRIPTION OF THE DRAWINGS

Figure 1 schematically illustrates an example gas turbine engine.
Figure 2 schematically illustrates an exemplary instrumentation egress port and instrumentation egress adaptor.
Figure 2A schematically illustrates an enlarged view of a portion of the instrumentation egress port and instrumentation egress adaptor of Figure 2.
Figure 3 schematically illustrates a cooled lead wire tube connected to the configuration of Figure 2.

### DETAILED DESCRIPTION OF AN EMBODIMENT

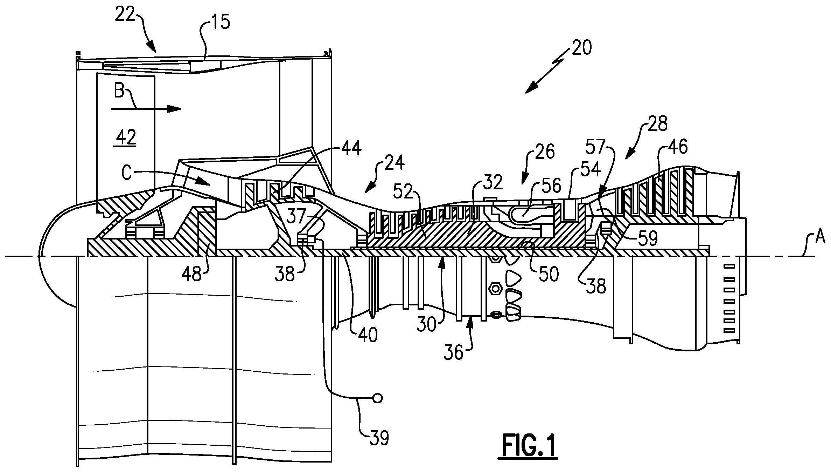

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

Included within one of the bearing systems 38 is an instrumentation egress 37. One or more lead wires 39 passes through the instrumentation egress 37, allowing a controller, or other data collection device, to connect to one or more sensors (instrumentation devices) within the bearing system 38. During engine testing and validation, the sensors collect information about parameters, such as temperature and pressure, within the compartment. While illustrated as being positioned in a single bearing compartment of a bearing system 38, one of skill in the art will understand that instrumentation, and instrumentation egresses 37, can be installed in any number of bearing compartments in any number of bearing systems 38, or similar compartments, throughout the gas turbine engine 20.

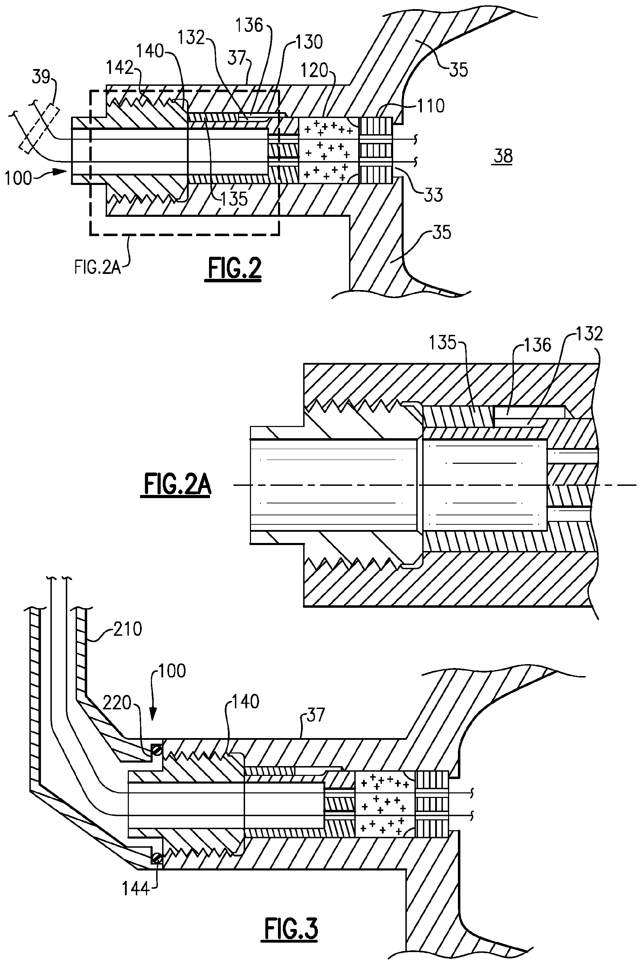

Further, in some exemplary systems, the lead wire 39 passing through the egress is sensitive to heat, such as the heat produced via the operation of a gas turbine engine. According to the invention, the lead wire 39 is contained within a cooling tube (illustrated in Figure 3), and cooled in order to prevent damage. The cooling tube may be connected to the instrumentation egress 37 via a connection feature.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

During testing and validation of the gas turbine engine 20, the bearing systems 38, and other compartments within the gas turbine engine, are monitored to ensure that temperature, pressure and other parameters in the compartment are maintained within acceptable levels. To achieve this monitoring, the lead wire 39 is connected to instrumentation within the corresponding compartment through the instrumentation egress 37 in one of the walls of the compartment.

Figure 2 illustrates an exemplary instrumentation egress 37 including an instrumentation adaptor 100. The instrumentation egress 37 is a portion of the bearing compartment walls 35 that defines an opening 33. The instrumentation egress 37 can be machined, or cast, in a single solid portion of the bearing compartment walls 35, or formed at a joint between multiple bearing compartment walls 35. In alternative examples, other known methods for creating an egress opening can be utilized to the same effect. The instrumentation adaptor 100 contained within the instrumentation egress 37 includes a seat 110, a seal 120, a follower 130, and a nut 140.

Instrumentation lead wires 39 are passed through the adaptor 100 to a controller or other data collection device outside the test engine 20. In the illustrated example, two lead wires 39 are passed through the instrumentation egress 37. Alternate examples can include additional lead wires 39 passing through the same holes in the egress adaptor 100 or through distinct holes arranged in a similar fashion, or a single lead wire 39.

Each of the seat 110, the follower 130 and the nut 140 include one or more holes, referred to as lead pass throughs, through which the lead wires 39 are passed. In one example, the lead pass throughs are sized to loose fit one or more lead wires 39. The seal 120 is constructed of a crushing sealing material and the lead wires 39 are passed through the seal 120. During installation of the adaptor 100, the seal 120 is compressed against the seat 110. The compression of the seal 120 crushes the sealing material against the lead wires 39 and creates an airtight, or approximately airtight, seal around the wires 39. Any suitable crushing seal material can be utilized to form the seal 120. In one example, the seal 120 is a flexible graphite material.

The compression of the seal 120 is achieved by rotation of the nut 140, and can be configured to any desired level of compression. To maintain the nut 140 in position, and maintain the compression of the seal 120, during the engine test, the nut 140 includes threading 142 on one or more exterior surfaces of the nut 140. The threading 142 interfaces with threading on an interior facing surface of the instrumentation egress 37.

In some engines, rotation of the nut 140 can cause a corresponding rotation of the follower 130, the seal 120, and the seat 110. Such a rotation can cause the lead wires 39 to shear. To address this, in some examples the follower 130 includes a pin slot 132 configured to align with a corresponding pin slot 136 in the instrumentation egress 37. Figure 2A schematically illustrates an enlarged view of a portion of the instrumentation egress port and instrumentation egress adaptor of Figure 2. A separate pin 135 engages both slots 136, 132 and prevents the follower 130 from rotating along with the nut 140 during installation of the egress adaptor 100. In alternative examples, the pin feature 132 can be replaced with alternate keying techniques to prevent rotation of.

With continued reference to Figures 2 and 2A, and with like numerals indicating like elements, Figure 3 illustrates the instrumentation egress 37 of Figure 2 with an attached cooling tube 210. Instrumentation within a bearing compartment of a turbine section of a test engine is exposed to extreme temperatures during operation. The lead wires 39 are actively cooled in order to prevent damage to the lead wires 39. In order to facilitate cooling the lead wires 39, a cooling tube 210 is connected to the bearing compartment instrumentation egress 37 via a separate bolted connection feature in a way that surrounds the nut 140, and the lead wires 39 are passed through the cooling tube. The attached cooling tube 210 has a groove feature 220, and a sealing feature 144, such as a metal c-seal type seal. In alternate examples, the connection feature can be any connection feature, and the groove feature and sealing feature is not required to seal the joint between the cooling tube and the bearing compartment egress feature 37.

In accordance with the invention, the cooling tube 210 is actively cooled via injection of cooling fluid, such as air or Gaseous Nitrogen (GN₂), into the interior of the cooling tube 210, or alternatively, a cooling fluid can be circulated through passages in the walls of the cooling tube 210, and provide a cooling and insulating effect to the interior of the cooling tube 210.

With reference to both Figures 2 and 3, the utilization of a nut 140 interfacing with the instrumentation egress 37 allows the nut 140 and the component or components forming the instrumentation egress 37 to be formed of dissimilar metals without impacting the ability to maintain the nut 140, or other instrumentation egress elements, in position. As the nut 140 is interfaced with the instrumentation egress 37 via an interface feature, the interface feature can compensate for dissimilar thermal expansion. This allows more flexibility in the design of the nut 140, and the instrumentation adaptor 100. In contrast, existing welded on instrumentation egress and instrumentation adaptor systems are required to have similar metal types between the egress adaptor and the bearing compartment in order to facilitate the welding process.

## Claims

1. A gas turbine engine (20) comprising:
a compressor (44, 52);
a combustor (56) fluidly connected to the compressor (44, 52);
a turbine (46, 54) fluidly connected to the combustor (56);
at least one instrumentation egress (37) incorporated in a compartment of said compressor (44, 52), combustor (56) and turbine (46, 54); and
an instrumentation adaptor (100) incorporated in said at least one instrumentation egress (37), the instrumentation adaptor (100) comprising:
a seat (110); **characterized in that** the instrumentation adapter further comprises
a seal (120) contacting a surface of the seat (110) and being constructed of a crushing seal material;
a follower (130) contacting said seal (120) opposite said seat (110);
a compressive component (140) contacting said follower (130) opposite said seal (120) and including an exterior facing interface feature, wherein the compressive component (140) is interfaced with an interior surface feature of the instrumentation egress (37), the seal (120) is maintained in a compressed state via said compressive component (140), and a cooling tube (210) is connected to said instrumentation egress (37), the cooling tube (210) including a lead wire passage passing through the cooling tube (210) for receiving one or more instrumentation lead wires (39); and
a cooling fluid source, wherein an injection means is configured to inject cooling fluid from the cooling fluid source into an interior of the cooling tube (210), or passages in a wall of the cooling tube (210) are configured to circulate cooling fluid received from the cooling fluid source.

2. The gas turbine engine (20) of claim 1, wherein the exterior facing interface feature includes a threaded exterior surface (142).

3. The gas turbine engine (20) of claim 1 or 2, further comprising a plurality of instrumentation leads (39) passing through said seat (110), seal (120), follower (130) and compressive component (140).

4. The gas turbine engine (20) of claim 3, wherein said seal (120) is crushed against each of said leads (39) in said plurality of instrumentation leads (39), such that an airtight seal exists around each of said leads (39).

5. The gas turbine engine (20) of any preceeding claim, wherein each of said seat (110), follower (130), and compressive component (140) include at least one lead pass through.

6. The gas turbine engine (20) of claim 5, wherein the at least one lead pass through is sized to loose fit at least one instrumentation lead (39).

7. The gas turbine engine (20) of any preceding claim, wherein the cooling tube (210) is connected to said instrumentation adaptor (100) via a seal (144).

8. The gas turbine engine (20) of any preceding claim, further comprising at least one instrumentation sensor positioned within a gas turbine engine compartment, the instrumentation sensor including at least one lead wire (39), and the at least one lead wire (39) passing through said at least one instrumentation egress (37).

9. The gas turbine engine (20) of claim 8, wherein the gas turbine engine compartment is a bearing compartment (38).

10. A method for sealing an instrumentation egress (37) for a test gas turbine engine and actively cooling lead wires passing therethrough, the method comprising:
passing a plurality of lead wires (39) through an instrumentation egress (37), **characterized in that** the method further comprises
compressing a seal (120) in said instrumentation egress (37) against a seat (110) via rotation of a compressive component (140);
maintaining compression of said compressive component (140) via an interface between said compressive component (140) and an inward facing surface of said instrumentation egress (37); and
connecting a cooling tube (210) to an output of said instrumentation egress (37) and passing said lead wires (39) through said cooling tube (210), wherein the cooling tube (210) is actively cooled via injection of cooling fluid into an interior of the cooling tube (210), or by circulation of cooling fluid through passages in a wall of the cooling tube (210).

11. The method of claim 10, wherein the interface between said compressive component (140) and said inward facing surface of said instrumentation egress (37) is an exterior facing threading (142) of said compressive component (140) and a complimentary inward facing threading of said inward facing surface.

## Patentansprüche

1. Gasturbinenmotor (20), umfassend:
einen Verdichter (44, 52);
eine Brennkammer (56), die mit dem Verdichter (44, 52) fluidisch verbunden ist;
eine Turbine (46, 54), die mit der Brennkammer (56) fluidisch verbunden ist;
mindestens einen Instrumentierungsausgang (37), der in eine Kammer des Verdichters (44, 52), der Brennkammer (56) und der Turbine (46, 54) eingebaut ist; und
einen Instrumentierungsadapter (100), der in den mindestens einen Instrumentierungsausgang (37) eingebaut ist, wobei der Instrumentierungsadapter (100) Folgendes umfasst:
einen Sitz (110); **dadurch gekennzeichnet, dass** der Instrumentierungsadapter ferner Folgendes umfasst:
eine Dichtung (120), die eine Fläche des Sitzes (110) kontaktiert und aus einem Quetschdichtungsmaterial konstruiert ist;
einen Mitnehmer (130), der die Dichtung (120) gegenüber des Sitzes (110) kontaktiert;
eine zusammendrückende Komponente (140), die den Mitnehmer (130) gegenüber der Dichtung (120) kontaktiert und ein nach außen weisendes Schnittstellenmerkmal beinhaltet, wobei die zusammendrückende Komponente (140) eine Schnittstelle mit einem Innenflächenmerkmal des Instrumentierungsausgangs (37) bildet, die Dichtung (120) über die zusammendrückende Komponente (140) in einem zusammengedrückten Zustand gehalten wird und ein Kühlrohr (210) mit dem Instrumentierungsausgang (37) verbunden ist, wobei das Kühlrohr (210) einen Leitungsdrahtdurchgang, der durch das Kühlrohr (210) verläuft, zum Aufnehmen eines oder mehrerer Instrumentierungsleitungsdrähte (39) beinhaltet; und
eine Kühlflüssigkeitsquelle, wobei ein Einspritzmittel dazu ausgelegt ist, Kühlflüssigkeit von der Kühlflüssigkeitsquelle in einen Innenraum des Kühlrohrs (210) einzuspritzen oder Durchgänge in einer Wand des Kühlrohrs (210) dazu ausgelegt sind, von der Kühlflüssigkeitsquelle erhaltene Kühlflüssigkeit zu zirkulieren.

2. Gasturbinenmotor (20) nach Anspruch 1, wobei das nach außen weisende Schnittstellenmerkmal eine durchgeführte Außenfläche (142) beinhaltet.

3. Gasturbinenmotor (20) nach Anspruch 1 oder 2, ferner umfassend eine Vielzahl von Instrumentierungsleitungen (39), die durch den Sitz (110), die Dichtung (120), den Mitnehmer (130) und die zusammendrückende Komponente (140) verlaufen.

4. Gasturbinenmotor (20) nach Anspruch 3, wobei die Dichtung (120) gegen jede der Leitungen (39) in der Vielzahl von Instrumentierungsleitungen (39) derart gequetscht wird, dass eine luftdichte Dichtung um jede der Leitungen (39) besteht.

5. Gasturbinenmotor (20) nach einem der vorangehenden Ansprüche, wobei der Sitz (110), der Mitnehmer (130) und die zusammendrückende Komponente (140) jeweils mindestens eine Leitungsdurchführung beinhalten.

6. Gasturbinenmotor (20) nach Anspruch 5, wobei die mindestens eine Leitungsdurchführung derart bemessen ist, dass mindestens eine Instrumentierungsleitung (39) locker hindurchpasst.

7. Gasturbinenmotor (20) nach einem der vorangehenden Ansprüche, wobei das Kühlrohr (210) mit dem Instrumentierungsadapter (100) über eine Dichtung (144) verbunden ist.

8. Gasturbinenmotor (20) nach einem der vorangehenden Ansprüche, ferner umfassend mindestens einen Instrumentierungssensor, der in einer Gasturbinenmotorkammer positioniert ist, wobei der Instrumentierungssensor mindestens einen Leitungsdraht (39) beinhaltet und der mindestens eine Leitungsdraht (39) durch den mindestens einen Instrumentierungsausgang (37) verläuft.

9. Gasturbinenmotor (20) nach Anspruch 8, wobei die Gasturbinenmotorkammer eine Lagerkammer (38) ist.

10. Verfahren zum Abdichten eines Instrumentierungsausgangs (37) für einen Testgasturbinenmotor und aktiv kühlende Leitungsdrähte, die dadurch verlaufen, wobei das Verfahren Folgendes umfasst:
Durchführen einer Vielzahl von Leitungsdrähten (39) durch einen Instrumentierungsausgang (37), **dadurch gekennzeichnet, dass** das Verfahren ferner Folgendes umfasst:
Zusammendrücken einer Dichtung (120) in dem Instrumentierungsausgang (37) gegen einen Sitz (110) über Drehung der zusammendrückenden Komponente (140);
Erhalten des Zusammendrückens der zusammendrückenden Komponenten (140) über eine Schnittstelle zwischen der zusammendrückenden Komponenten (140) und einer nach innen weisenden Fläche des Instrumentierungsausgangs (37); und
Verbinden eines Kühlrohrs (210) mit einem Ausgang des Instrumentierungsausgangs (37) und Durchführen der Leitungsdrähte (39) durch das Kühlrohr (210), wobei das Kühlrohr (210) über Einspritzung von Kühlflüssigkeit in einen Innenraum des Kühlrohrs (210) oder durch Zirkulation von Kühlflüssigkeit durch Durchgänge in einer Wand des Kühlrohrs (210) aktiv gekühlt wird.

11. Verfahren nach Anspruch 10, wobei die Schnittstelle zwischen der zusammendrückenden Komponente (140) und der nach innen weisenden Fläche des Instrumentierungsausgangs (37) eine nach außen weisende Einführung (142) der zusammendrückenden Komponente (140) und eine komplementäre nach innen weisende Einführung der nach innen weisenden Fläche ist.

## Revendications

1. Turbomachine à gaz (20) comprenant :
un compresseur (44, 52) ;
une chambre de combustion (56) reliée fluidiquement au compresseur (44, 52) ;
une turbine (46, 54) reliée fluidiquement à la chambre de combustion (56) ;
au moins une sortie d'instrumentation (37) incorporée dans un compartiment dudit compresseur (44, 52), de ladite chambre de combustion (56) et de ladite turbine (46, 54) ; et
un adaptateur d'instrumentation (100) incorporé dans ladite au moins une sortie d'instrumentation (37), l'adaptateur d'instrumentation (100) comprenant :
un siège (110) ; **caractérisée en ce que** l'adaptateur d'instrumentation comprend en outre
un joint (120) en contact avec une surface du siège (110) et étant construit en un matériau de joint d'écrasement ;
un suiveur (130) en contact avec ledit joint (120) opposé audit siège (110) ;
un composant de compression (140) en contact avec ledit suiveur (130) opposé audit joint (120) et comportant une caractéristique d'interface tournée vers l'extérieur, dans laquelle le composant de compression (140) est interfacé avec une caractéristique de surface intérieure de la sortie d'instrumentation (37), le joint (120) est maintenu dans un état comprimé par l'intermédiaire dudit composant de compression (140), et un tube de refroidissement (210) est relié à ladite sortie d'instrumentation (37), le tube de refroidissement (210) comportant un passage de fil conducteur traversant le tube de refroidissement (210) pour recevoir un ou plusieurs fils conducteurs d'instrumentation (39) ; et
une source de fluide de refroidissement, dans laquelle un moyen d'injection est configuré pour injecter du fluide de refroidissement depuis la source de fluide de refroidissement dans un intérieur du tube de refroidissement (210), ou des passages dans une paroi du tube de refroidissement (210) sont configurés pour faire circuler le fluide de refroidissement reçu de la source de fluide de refroidissement.

2. Turbomachine à gaz (20) selon la revendication 1, dans laquelle la caractéristique d'interface tournée vers l'extérieur comporte une surface extérieure filetée (142).

3. Turbomachine à gaz (20) selon la revendication 1 ou 2, comprenant en outre une pluralité de fils conducteurs d'instrumentation (39) traversant ledit siège (110), joint (120), suiveur (130) et composant de compression (140).

4. Turbomachine à gaz (20) selon la revendication 3, dans laquelle ledit joint (120) est écrasé contre chacun desdits fils conducteurs (39) dans ladite pluralité de fils conducteurs d'instrumentation (39), de sorte qu'un joint étanche à l'air existe autour de chacun desdits fils conducteurs (39).

5. Turbomachine à gaz (20) selon une quelconque revendication précédente, dans laquelle chacun dudit siège (110), suiveur (130) et composant de compression (140) comporte au moins un passage de fil conducteur.

6. Turbomachine à gaz (20) selon la revendication 5, dans laquelle l'au moins un passage de fil conducteur est dimensionné pour s'adapter librement à au moins un fil conducteur d'instrumentation (39).

7. Turbomachine à gaz (20) selon une quelconque revendication précédente, dans laquelle le tube de refroidissement (210) est relié audit adaptateur d'instrumentation (100) par l'intermédiaire d'un joint (144).

8. Turbomachine à gaz (20) selon une quelconque revendication précédente, comprenant en outre au moins un capteur d'instrumentation positionné à l'intérieur d'un compartiment de turbomachine à gaz, le capteur d'instrumentation comportant au moins un fil conducteur (39) et l'au moins un fil conducteur (39) traversant ladite au moins une sortie d'instrumentation (37) .

9. Turbomachine à gaz (20) selon la revendication 8, dans laquelle le compartiment de turbomachine à gaz est un compartiment de palier (38).

10. Méthode pour sceller une sortie d'instrumentation (37) pour une turbomachine à gaz d'essai et refroidir activement les fils conducteurs qui la traversent, la méthode comprenant :
le passage d'une pluralité de fils conducteurs (39) à travers une sortie d'instrumentation (37), **caractérisée en ce que** la méthode comprend en outre
la compression d'un joint (120) dans ladite sortie d'instrumentation (37) contre un siège (110) par la rotation d'un composant de compression (140) ;
le maintien de la compression dudit composant de compression (140) par l'intermédiaire d'une interface entre ledit composant de compression (140) et une surface tournée vers l'intérieur de ladite sortie d'instrumentation (37) ; et
le raccordement d'un tube de refroidissement (210) à une sortie de ladite sortie d'instrumentation (37) et le passage desdits fils conducteurs (39) à travers ledit tube de refroidissement (210), dans laquelle le tube de refroidissement (210) est activement refroidi par l'injection de fluide de refroidissement dans un intérieur du tube de refroidissement (210), ou par la circulation de fluide de refroidissement à travers des passages dans une paroi du tube de refroidissement (210) .

11. Procédé selon la revendication 10, dans lequel l'interface entre ledit composant de compression (140) et ladite surface tournée vers l'intérieur de ladite sortie d'instrumentation (37) est un filetage tourné vers l'extérieur (142) dudit composant de compression (140) et un filetage complémentaire tourné vers l'intérieur de ladite surface tournée vers l'intérieur.
